# EUROPEAN PATENT APPLICATION

(11) **EP 1 881 501 A1**
(43) Date of publication of application: **23.01.2008**
(21) Application number: 07101062.3
(22) Date of filing: 24.01.2007
(51) Int. Cl.: G11B 31/00

(54) **Photographing apparatuses and method for wirelessly transmitting to and/or receiving data from other photographing apparatuses**

(30) Priority: 03.07.2006 KR 20060062031
(71) Applicant: Samsung Electronics Co., Ltd., Suwon-si Gyeonggi-do (KR)
(72) Inventor: MIN, Beoung-ouk, Yongin-si Gyeonggi-do (KR)
(74) Representative: Schuster, Thomas

(57) **Abstract**

A photographing apparatus and a method of transmitting and/or receiving data between the photographing apparatuses wirelessly are provided. The photographing apparatus includes a camera unit for photographing a video to generate a video signal; a signal processor for processing the video signal to transform the video signal into digital video data; a display for displaying the digital video data; a compressor for compressing the digital video data in a predetermined format; a storage unit for storing the compressed digital video data; a wireless receiver for receiving a video signal from an external photographing apparatus wirelessly and transmitting the video signal to the signal processor; and a power switch for supplying power to the wireless receiver and/or intercepting the supply of power to the wireless receiver. Thus, data can be transmitted and/or received wirelessly so as to provide a convenient photographing environment to a user.

## Description

### BACKGROUND OF THE INVENTION

### Field of the Invention

The present invention relates to photographing apparatuses and a method of wirelessly transmitting and/or receiving data between the photographing apparatuses. More particularly, the present invention relates to an external camera, a camcorder receiving data wirelessly from the external camera, and a method of transmitting and/or receiving data between the external camera and the camcorder.

### Description of the Related Art

In general, a compact external camera is an apparatus having a simple photographing function that can be connected to a camcorder by cable. Such an external camera is mainly used for simple photographing during leisure or sports activities.

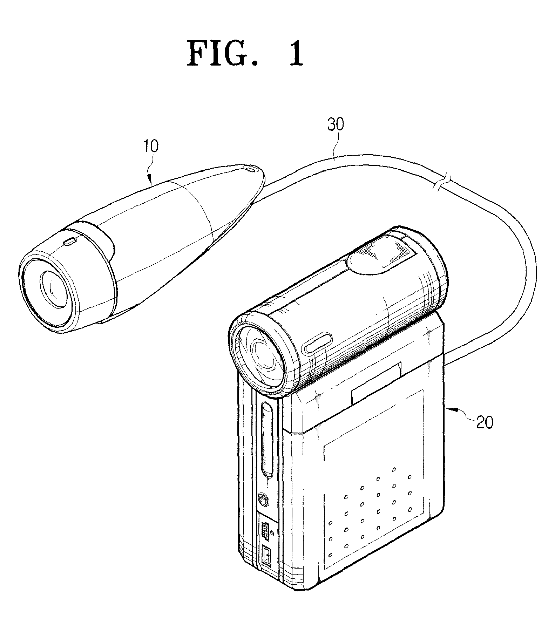

FIG. 1 is a view illustrating conventional photographing apparatuses for transmitting and/or receiving data by wire. Referring to FIG. 1, the conventional photographing apparatuses are an external camera 10 and a camcorder 20.

The external camera 10 is connected to the camcorder 20 by a cable 30 to transmit a photographed video signal and a recorded audio signal to the camcorder 20 through the cable 30. Thus, a user may see a video photographed by the external camera 10 through a liquid crystal display (LCD) and listen to an audio recorded in the external camera 10 through a speaker.

Alternatively, the user may store the video signal photographed through the external camera 10 and the audio signal recorded through the external camera 10 in the camcorder 20. The cable 30 may include an additional remote controller (not shown) through which a user command is input. Thus, the user may manipulate the remote controller to control an operation of the external camera 10.

As described above, the external camera 10 and the camcorder 20 connected to each other through the cable 30 must remain in close proximity to one another. Thus, to solve this problem, the user must carry the camcorder 20 together with the external camera 10. Also, the user may feel inconvenience due to the length of the cable 30, and the cable 30 may be caught on another object, broken or cause an accident. Accordingly, there is a need to provide a camcorder and external camera that transmit and/or receive data wirelessly.

### SUMMARY OF THE INVENTION

An aspect of the present invention is to address at least the above problems and/or disadvantages and to provide at least the advantages described below. Accordingly, an aspect of the present invention is to provide photographing apparatuses connected to each other wirelessly to transmit and/or receive data so that a user conveniently uses the photographing apparatuses and a method of transmitting and/or receiving data wirelessly between the photographing apparatuses.

According to an aspect of the present invention, there is provided a second photographing apparatus including a camera unit for photographing a video to generate a video signal; a signal processor for processing the video signal to transform the video signal into digital video data; a display for displaying the digital video data; a compressor for compressing the digital video data in a predetermined format; a storage unit for storing the compressed digital video data; a wireless receiver for receiving a video signal from an external photographing apparatus wirelessly and transmitting the video signal to the signal processor; and a power switch for supplying power to the wireless receiver.

The second photographing apparatus may further include a first power supplying unit for supplying power to the wireless receiver; and a second power supplying unit for supplying a power source to a body comprising the camera unit, the signal processor, and the display.

The second power supplying unit and the wireless receiver may be integrated in to a module to be mounted on and/or separated from the body.

If the power switch is switched on, a mode of the video photographing apparatus may be converted into a wireless receiving mode in which a video signal is received from the external photographing apparatus wirelessly.

The second photographing apparatus may further include a channel selector for selecting a channel of the wireless receiver.

The channel selector may select one of four channels through manipulations of two switches. The channel selected by the channel selector preferably coincides with a channel selected by the external photographing apparatus.

According to another aspect of the present invention, there is provided a video apparatus including a wireless receiver for receiving a video signal from an external apparatus wirelessly; a display for displaying the video signal; a mode selector for selecting one of a wireless receiving mode and a normal mode, wherein the video signal is received from the external apparatus wirelessly in the wireless receiving mode; and a channel selector for selecting a channel of the wireless receiver.

According to another aspect of the present invention, there is provided a second photographing apparatus including a body for digitally processing a photographed video signal; a display for displaying the digitally processed video signal; a first power supplying unit for supplying power to the body and the display; a wireless receiver for receiving a video signal from an external photographing apparatus wirelessly and transmitting the video signal to the body; and a second power supplying unit for supplying a power source to the wireless receiver.

If the power source is supplied to the wireless receiver, a mode of the second photographing apparatus may be converted into a wireless receiving mode in which the video signal is received from the external photographing apparatus wirelessly.

The second photographing apparatus may further include a channel selector for selecting a channel of the wireless receiver.

According to another aspect of the present invention, there is provided a first photographing apparatus including a signal generator for photographing a video to generate a video signal; a transmitter for transmitting the video signal wirelessly; and a channel selector for selecting a channel of the transmitter.

The channel selector preferably selects one of four channels through manipulations of two switches.

According to another aspect of the present invention, there is provided a method of transmitting and/or receiving data wirelessly, including transmitting a video signal generated by a first photographing apparatus wirelessly; selecting a channel through which the video signal is to be transmitted wirelessly; and transmitting the video signal to a second photographing apparatus through the selected channel wirelessly.

The method may further include converting a mode of the second photographing apparatus into a wireless receiving mode in which the video signal is received from the first photographing apparatus wirelessly if a power source is supplied to a receiver of the second photographing apparatus.

The channel through which the video signal is to be transmitted wirelessly is preferably selected so that a channel of the first photographing apparatus coincides with a channel of the second photographing apparatus.

### BRIEF DESCRIPTION OF THE DRAWING FIGURES

The above and other objects, features, and advantages of certain exemplary embodiments of the present invention will be more apparent from the following description taken in conjunction with the accompanying drawings, in which:

FIG. 1 is a view illustrating conventional photographing apparatuses respectively transmitting and/or receiving data by wire;

FIG. 2 is a view illustrating photographing apparatuses respectively transmitting and/or receiving data wirelessly according to an exemplary embodiment of the present invention;

FIG. 3 is a block diagram illustrating a schematic structure of a first photographing apparatus according to an exemplary embodiment of the present invention;

FIG. 4 is a block diagram illustrating a schematic structure of a second photographing apparatus according to an exemplary embodiment of the present invention; and

FIGS. 5 and 6 are flowcharts illustrating operations of transmitting and/or receiving data between photographing apparatuses, according to exemplary embodiments of the present invention.

Throughout the drawings, the same reference numerals will be understood to refer to the same elements, features, and structures.

### DETAILED DESCRIPTION OF EXEMPLARY EMBODIMENTS

The matters defined in the following description such as a detailed construction and elements are provided to assist in a comprehensive understanding of the exemplary embodiments of the invention and are merely exemplary. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

Hereinafter, certain exemplary embodiments of the present invention will be described in detail with reference to the accompanying drawing figures.

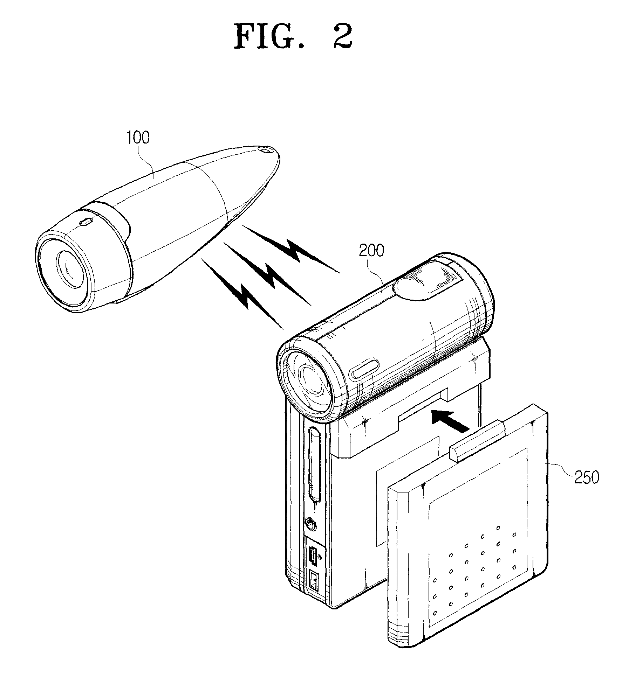

FIG. 2 is a view illustrating photographing apparatuses respectively transmitting and/or receiving data wirelessly according to an embodiment of the present invention. An external camera 100, a camcorder body 200, and a module unit 250 are shown in FIG. 2. The external camera 100 is a photographing apparatus capable of transmitting data wirelessly, and the camcorder 200 is a photographing apparatus capable of receiving data wirelessly.

The external camera 100 photographs video and records audio to generate a video signal and an audio signal, modulates the video and audio signals, and transmits the modulated video and audio signals to the module unit 250 mounted on the camcorder body 200. The embodiment shown in FIG. 2 illustrates a separate module unit 250 that can be connected to the camcorder body 200, but it should be understood that the module 250 may also be integral with the camcorder body 200.

The camcorder body 200 performs photographing and playing functions and a function of a recording apparatus for storing the video and audio signals. Also, the camcorder body 200 receives the video and audio signals from the external camera 100 through the module unit 250 and outputs the video and audio signals through a liquid crystal display (LCD) and a speaker installed in the camcorder body 200 and/or stores the video and audio signals in a storing medium installed in the camcorder body 200.

Preferably, the module unit 250 may be installed on and/or separated from the camcorder body 200. The module unit 250 is installed on the camcorder body 200 to supply a power source to the camcorder body 200. The module 250 unit also demodulates the video and audio signals transmitted from the external camera 100 into original video and audio signals and transmits the demodulated video and audio signals to the camcorder body 200.

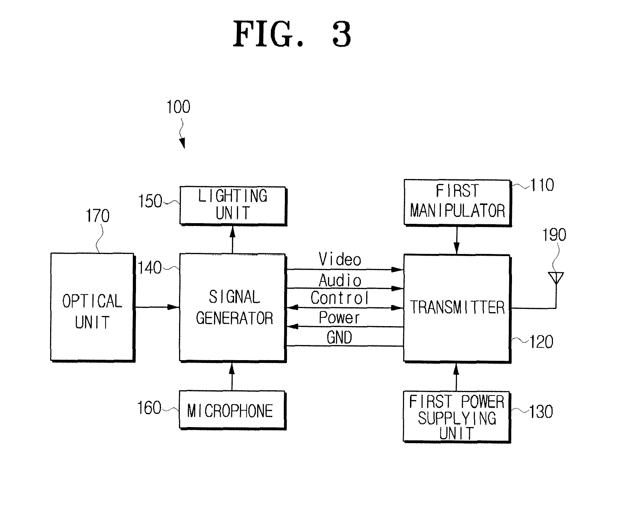

FIG. 3 is a block diagram illustrating a schematic structure of a first photographing apparatus according to an embodiment of the present invention. Referring to FIG. 3, an external camera 100 as the first photographing apparatus according to an exemplary embodiment preferably includes a first manipulator 110, a transmitter 120, a first power supplying unit 130, a signal generator 140, a lighting unit 150, a microphone 160, an optical unit 170, and a first antenna 190.

The first manipulator 110 includes a power key (not shown) and a channel selection switch (not shown). The power key is used to supply power to the external camera 100. The channel selection switch is used to select a transmission channel. The power key is preferably a tack type switch, such that if the tack type switch is pushed once, the tack type switch supplies power, and if the tack type switch is pushed again, the tack type switch disconnects power. In the embodiment shown in FIG. 3, if the power key is pushed once, a power source is supplied from the first power supplying unit 130 to the signal generator 140 through the transmitter 120. The channel selection switch is preferably a slide type switch and preferably includes first and second switches so as to select one among four channels as shown in the exemplary Table 1 below.

**[Table 1]**

| Channel | First Switch State | Second Switch State | Frequency and Bandwidth |
|---|---|---|---|
| First Channel | 0 | 0 | 2410MHz±18MHz |
| Second Channel | 0 | 1 | 2430MHz±18MHz |
| Third Channel | 1 | 0 | 2450MHz±18MHz |
| Fourth Channel | 1 | 1 | 2470MHz±18MHz |

The slide type switch preferably slides up and/or down or to the left and/or right to be switched on and/or off. Referring to Table 1, "0" denotes a state of the first or second switch which is switched off, and "1" denotes a state of the first or second switch which is switched on.

The first power supplying unit 130 includes an alternating current (AC) adaptor jack (not shown) which transmits an AC power source supplied from an external source to the transmitter 120. The first power supplying unit 130 may also includes a battery (not shown) to supply a power source to the transmitter 120.

If the transmitter 120 receives a command to turn on a power source through the first manipulator 110, the transmitter 120 supplies power supplied from the first power supplying unit 130 to the signal generator 140. When the signal generator 140 is supplied with the power source, the signal generator 140 supplies power to the lighting unit 150 during photographing and recording so as to switch on the lighting unit 150.

When the signal generator 140 is supplied with power from the transmitter 120, the signal generator 140 modulates a video photographed through the optical unit 170 into a video signal, and transmits the video signal to the transmitter 120 through a video line. The signal generator 140 also transforms an audio recorded through the microphone 160 into an audio signal and transmits the audio signal to the transmitter 120 through an audio line.

Here, the optical unit 170 transforms a video photographed by a sensor such as a complementary metal oxide semiconductor (CMOS) or a charged-coupled device (CCD) into an electrical signal and transmits the electrical signal to the signal generator 140. The microphone 160 transforms an input audio into an electrical signal and transmits the electrical signal to the signal generator 140. The lighting unit 150 is preferably a light emitting diode and is preferably switched on when the signal generator 140 is supplied with the power source.

As shown in FIG. 3, the signal generator 140 and the transmitter 120 are preferably connected to each other through five lines. The five lines are the power line through which the power source is supplied from the transmitter 120 to the signal generator 140, a ground line through which the signal generator 140 and the transmitter 120 are grounded, the video and audio lines through which the video and audio signals generated by the signal generator 140 are transmitted to the transmitter 120, and a control line through which a control signal is transmitted between the transmitter 120 and the signal generator 140.

The transmitter 120 modulates frequencies of the video and audio signals generated by the signal generator 140 and transmits the modulated video and audio signals through a channel selected by the first manipulator 110. In other words, the transmitter 120 modulates the frequencies of the video and audio signals so that the video and audio signals have frequencies and bandwidths corresponding to one of the first through fourth channels shown in exemplary Table 1 and transmits the modulated video and audio signals through the first antenna 190.

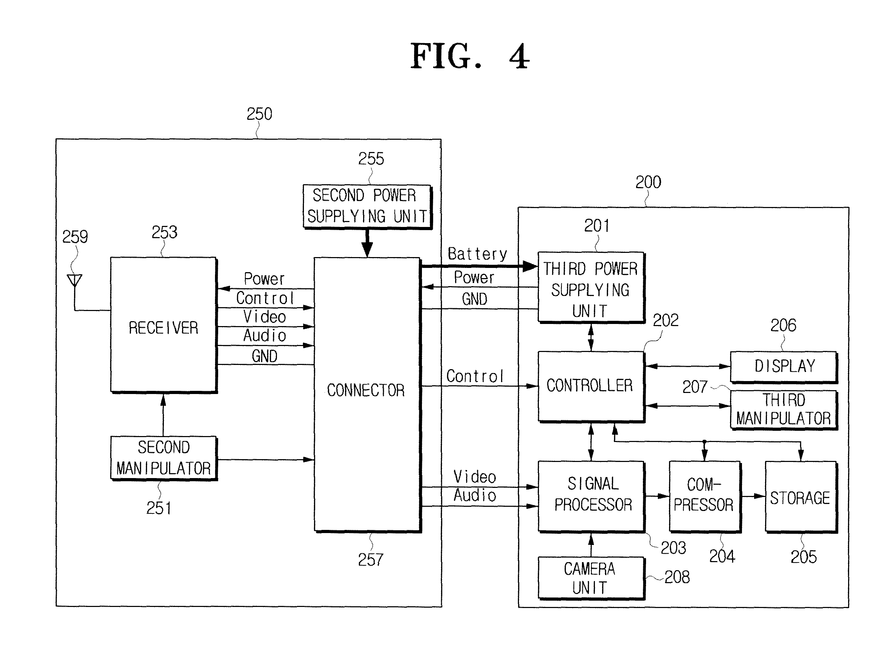

FIG. 4 is a block diagram illustrating a schematic structure of a second photographing apparatus according to an exemplary embodiment of the present invention. Referring to FIG. 4, a camcorder as the second photographing apparatus according to an exemplary embodiment includes a camcorder body 200 and a module unit 250 which supplies a power source to the camcorder body 200.

A structure of the module unit 250 will now be described. The module unit 250 includes a second manipulator 251, a receiver 253, a second power supplying unit 255, a connector 257, and a second antenna 259.

The second manipulator 251 includes a power switch (not shown) and a channel selection switch (not shown). The power switch is used to supply power to the receiver 253, and the channel selection switch is used to select a transmission channel. The power switch is preferably a slide type switch which slides up and/or down or to the left and/or right to turn on and/or off the power source. If the power switch is switched on, power is supplied from the camcorder body 200 to the receiver 253 through the connector 257.

The channel selection switch is preferably the same type as the channel selection switch of the external camera 100 and performs the same operation of channel selection as the external camera 100. In other words, the channel selection switch of the second manipulator 251 is preferably a slide type switch that slides up and/or down or to the left and/or right to be switched on and/or off. The second manipulator 251 preferably includes two channel selection switches so as to select one among four channels as shown in Table 1. Referring to Table 1, "0" denotes a state of the first or second switch which is switched off, and "1" denotes a state of the first or second switch which is switched on.

Here, the channel selection switch of the second manipulator 251 must be manipulated to be in the same state as the channel selection switch of the first manipulator 110 so as to receive video and audio signals from the external camera 100. For example, if the first switch of the first manipulator 100 is switched on and the second switch of the first manipulator 100 is switched off, the transmitter 120 modulates frequencies and bandwidths of the video and audio signals into 2450MHz±18MHz and transmits the modulated video and audio signals.

If the first switch of the second manipulator 251 is switched on and the second switch of the second manipulator 251 is switched off, the receiver 253 may receive the video and audio signals having the frequencies and bandwidths of 2450MHz±18MHz. As described above, frequencies and bandwidths of the transmitter 120 and the receiver 253 preferably coincide with each other to transmit and/or receive the video and audio signals without interference between channels.

The embodiments described herein include switches to select among four channels, but as will be understood by those of ordinary skill in the art, more or fewer switches may be employed to permit selecting among more or fewer channels. For example, three switches may be switched to select among eight channels.

The receiver 253 detects the modulated signals transmitted from the external camera 100 through the second antenna 259 to demodulate the modulated signals into video and audio signals. Here, the demodulated video and audio signals are transmitted to the camcorder body 200 through the connector 257. If the receiver 253 is supplied with power from the camcorder body 200, the receiver 253 preferably generates a high signal having a high voltage level and transmits the high signal to the camcorder body 200 through the connector 257 via a central line.

The connector 257 is preferably a protection circuit module (PCM) printed circuit board (PCB) which operates as a circuit stabilizing the power source supplied from the second power supplying unit 255. If the module unit 250 is mounted on the camcorder body 200, the connector 257 stabilizes the power source supplied from the second power supplying unit 255 and transmits the stabilized power source to the camcorder body 200.

The connector 257 transmits the high signal transmitted from the receiver 253 to the camcorder body 200 through a control line and the video and audio signals demodulated by the receiver 253 to the camcorder body 200 through video and audio lines.

If a command to turn on the power source is received through the second manipulator 251, the connector 257 transmits the power source supplied from the camcorder body 200 to the receiver 253 through a power line and connects ground lines of the module unit 250 and the camcorder body 200.

A battery such as a lithium polymer battery mainly used for charging may be used as the second power supplying unit 255. Thus, if the module unit 250 is mounted on the camcorder body 200, the second power supplying unit 255 supplies power to the camcorder body 200.

As described above, the second power supplying unit 255 used for charging and the receiver 253 are preferably integrated into the module unit 250, and the camcorder body 200 supplies the power source necessary for operating the receiver 253. Thus, when the module unit 250 is separated from the camcorder body 200, power is not supplied to the receiver 253. In other words, when the module unit 250 is separated from the camcorder body 200, power is not supplied from the second power supplying unit 255 to the receiver 253. Thus, unnecessary waste of the second power supplying unit 255 is prevented.

A structure of the camcorder body 200 will now be described. The camcorder body 200 includes a third power supplying unit 201, a controller 202, a signal processor 203, a compressor 204, a storage 205, a display 206, a third manipulator 207, and a camera unit 208.

When the module unit 250 is mounted on the camcorder body 200, the third power supplying unit 201 is supplied with stabilized power from the second power supplying unit 255 through the connector 257 or is supplied with an AC power source from an external source through an AC adaptor jack (not shown) of the camcorder body 200. Although not shown in FIG. 4, the third power supplying unit 201 preferably transforms the AC power source into a direct current (DC) power source and supplies the DC power to the controller 202, the signal processor 203, the compressor 204, the storage 205, the display 206, the third manipulator 207, the camera unit 208 of the camcorder body 200 and any other components in the camcorder body 200 which may require DC power.

The third power supplying unit 201 also supplies power necessary for the receiver 253 to the connector 257 through a power line according to a control signal of the controller 202. Preferably, if the command to turn on the power source is input through the second manipulator 251, the power source supplied to the connector 257 is transmitted to the receiver 253.

The camera unit 208 photographs still and moving pictures using a sensor such as a CMOS or a CCD, transforms the still and moving pictures into electrical video signals, and outputs the electrical video signals. Although not shown in FIG. 4, the camera unit 208 is preferably controlled by the controller 202 to adjust zoom, focusing, and the like so as to photograph a video.

The signal processor 203 transforms a video signal generated by the camera unit 208 and an audio signal generated through a microphone (not shown) of the camcorder body 200 into digital video and audio data. The signal processor 203 also receives the demodulated video and audio signals from the receiver 253 through the connector 257 and transforms the demodulated video and audio signals into digital video and audio data.

The compressor 204 is controlled by the controller 202 to receive the digital video and audio data and compresses the digital video data into, for example, Joint Photographic Expert Group (JPEG), Moving Picture Experts Group (MPEG), and digital video (DV) formats and the digital audio data in G.726 and PCM formats, although any suitable formats could be used.

The storage 205 stores the compressed video and audio data and may be an attachable and detachable integrated circuit (IC) memory card or a magnetic tape. In more detail, video data having JPEG and MPEG formats and audio data having a G.276 format is stored in the attachable and detachable IC memory card. The attachable and detachable IC memory card has a smaller storage capacity than the magnetic tape and is classified into a random access memory (RAM) card, a flash memory card, a non-volatile semiconductor memory card, among other things, according to a type of a housed memory. Video data having a DV format and audio data having a PCM format is stored in the magnetic tape.

The display 206 is controlled by the controller 202 to display the video data processed by the signal processor 203 on a screen such as an LCD. Also, a speaker (not shown) outputs audio data corresponding to the video data displayed on the display 206. The video and audio data stored in the storage 205 may be displayed on the screen of the display 206 and output through the speaker.

Although not shown in FIG. 4, the camcorder 200 further preferably includes an output port through which the video and audio data processed by the signal processor 203 is output to an external display device such as a television (TV).

The third manipulator 207 includes various keys used to receive user commands necessary for controlling the operation of the camcorder body 200. A user may manipulate the various keys of the third manipulator 207 to output video and audio signals transmitted from the external camera 100 through the display 206 and the speaker of the camcorder body 200, store the video and audio signals in the storage 205, or output the video and audio signals to an external apparatus.

The user may also turn on and/or off the power source of the camcorder body 200 and manipulate a mode of the camcorder body 200 through the third manipulator 207. In other words, the user may manipulates the various keys of the third manipulator 207 to convert the mode of the camcorder body 200 into a photographing mode so as to adjust the camera unit 208. Alternatively, the user may convert the mode of the camcorder body 200 into a playing mode to output the video and audio data stored in the storage 205 through the display 206 and the speaker.

The controller 202 controls the operation of the camcorder body 200 according to the user commands input through the third manipulator 207, preferably via a high signal or a low signal received through a control line.

Processes of supplying a power source and converting the mode of the camcorder body 200 into a wireless receiving mode will now be described based on the structures of the camcorder body 200 and the module unit 250.

When the module unit 250 is mounted on the camcorder body 200, the power source stabilized by the connector 257 is transmitted from the second power supplying unit 255 to the third power supplying unit 201, and the third power supplying unit 201 applies the power source to the connector 257 through the power line. If the power switch of the second manipulator 251 is switched on in this state, the connector 257 transmits the power source to the receiver 253 through the power line.

Here, if the battery used for charging as the second power supplying unit 255 is completely discharged, the third power supplying unit 201 may transform an AC power source provided from the external source through the AC adaptor jack into a DC power source and apply the DC power source to the connector 257.

If the power source is supplied to the receiver 253, the receiver 253 transmits the high signal having the high level voltage to the controller 202 through the control line. The controller 202 then controls the camcorder body 200 to convert the mode of the camcorder body 200 into the wireless receiving mode as a mode in which the video and audio signals are received from the external camera 100.

A message such as "External Input" or "External Input Mode" is preferably displayed on the display 206 to indicate that a camcorder (the camcorder body 200 and the module unit 250) is currently in the wireless receiving mode. If a signal is not received from the external camera 100 in the wireless receiving mode, the LCD may be displayed as a blue screen.

If the power switch of the second manipulator 25 is switched off, the connector 257 intercepts the power source supplied to the receiver 253 through the power line. If the power source is not supplied to the receiver 253, the receiver 253 transmits a low signal having a low level voltage to the controller 202 through the control line. Thus, the controller 202 controls the camcorder body 200 to convert the mode of the camcorder body 200 into a mode such as the photographing or playing mode other than the wireless receiving mode.

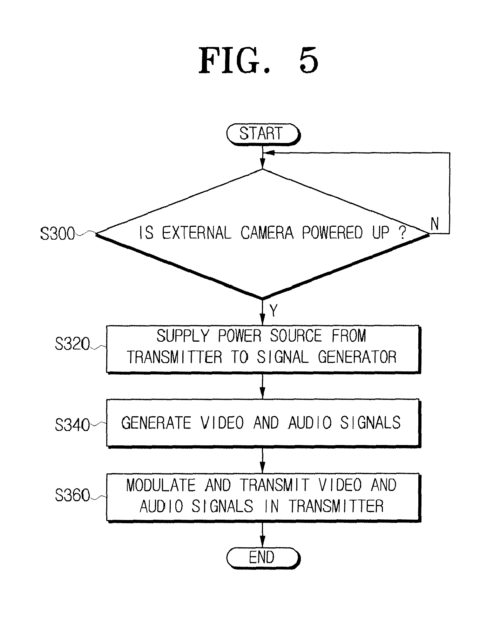

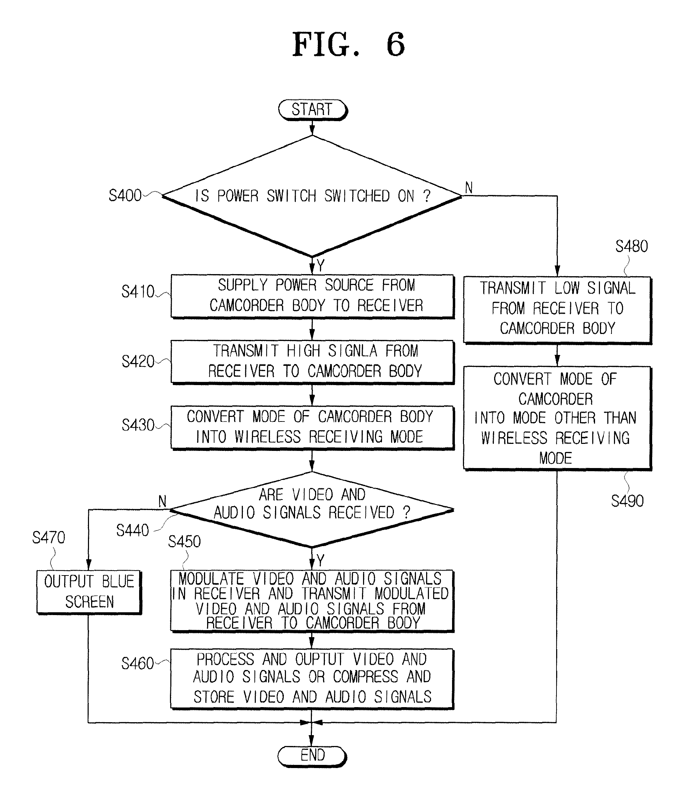

FIGS. 5 and 6 are flowcharts illustrating operations of transmitting and/or receiving data between photographing apparatuses, according to exemplary embodiments of the present invention.

FIG. 5 is a flowchart illustrating an operation of the external camera 100 transmitting data according to an exemplary embodiment of the present invention. Referring to FIG. 5, in operation S300, a determination is made as to whether a power source of the external camera is turned on through a manipulator of the first manipulator 110. If it is determined in operation S300 that the power source is turned on, the transmitter 120 supplies power to the signal generator 140 in operation S320. In other words, if a command to turn on the power source is input through the first manipulator 110, the transmitter 120 transmits the power source supplied from the first power supplying unit 130 to the signal generator 140.

In operation S340, the signal generator 140 generates a video signal corresponding to a video photographed through the optical unit 170 and an audio signal corresponding to an audio recorded through the microphone 160.

In operation S360, the video and audio signals generated by the signal generator 140 are modulated and transmitted by the transmitter 120. In other words, the video and audio signals are modulated by the transmitter 120 to have frequencies and bandwidths corresponding to a channel selected according to a channel selection command of the user input through the first manipulator 110 and then transmitted through the first antenna 190.

FIG. 6 is a flowchart illustrating an operation of the camcorder (the camcorder body 200 and the module unit 250) receiving data according to an exemplary embodiment of the present invention.

In operation S400, a determination is made as to whether a power switch is turned on through a manipulation of the second manipulator 251. If it is determined in operation S400 that the power switch is switched on, a power source is supplied from the camcorder body 200 to the receiver 253 in operation 5410. In other words, if the connector 257 receives a command to switch on the power, the connector 257 transmits the power source supplied from the third power supplying unit 202 to the receiver 253 through the power line. If the power source is supplied to the receiver 253, the receiver 253 preferably transmits a high signal having a high level voltage to the camcorder body 200 in operation S420. In operation S430, a mode of the camcorder body 200 and the module unit 250 is converted into a wireless receiving mode as a mode in which video and audio signals are received from the external camera 100.

In operation S440, a determination is made as to whether the video and audio signals are received through the receiver 253. If it is determined in operation S440 that the video and audio signals are received through the receiver 253, the receiver 253 demodulates the video and audio signals and transmits the demodulated video and audio signals to the camcorder body 200 in operation S450. In operation S460, the controller 202 controls the signal processor 203 to transform the video and audio signals into digital video and audio data and then controls the display 260 to output the digital video and audio data or the compressor 204 and storage 205 to compress and store the digital video and audio data.

If it is determined in operation S440 that the signal processor 203 does not receive the video and audio signals from the external camera 100, the controller 202 controls the display 206 to display a blue screen on a screen in operation S470.

If it is determined in operation S400 that the power source is not switched on, a low signal having a low level voltage is preferably transmitted from the receiver 253 to the camcorder body 200 in operation S480. In other words, if the power source is not supplied to the receiver 253, the receiver 253 generates the low signal. In operation S490, the mode of the camcorder body 200 and the module unit 250 is converted into a photographing or playing mode other than the wireless receiving mode.

Through the above described processes, video and audio signals generated by the external camera 100 are transmitted to the module unit 250 by wireless and output to or stored in the camcorder body 200 depending on the necessity of a user.

As described above, according to exemplary embodiments of the present invention, a camcorder and an external camera can be connected to each other by wireless to overcome limitations of their use ranges. Also, a convenient photographing environment can be provided to a user, and a safety accident can be prevented. In addition, channels of the external camera and the camcorder can coincide with each other to transmit and/or receive video and audio signals without interference between the channels. Thus, clear or clean video and audio can be provided to the user. Moreover, when a module unit is not mounted on a camcorder body, a power source of a battery is not supplied to a receiver. Thus, unnecessary waste of the battery is avoided.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A photographing apparatus comprising:
a camera unit for photographing a video to generate a video signal;
a signal processor for processing the video signal to transform the video signal into digital video data;
a display for displaying the digital video data;
a compressor for compressing the digital video data in a predetermined format;
a storage for storing the compressed digital video data;
a wireless receiver for receiving a video signal from an external photographing apparatus wirelessly and transmitting the video signal to the signal processor; and
a power switch for supplying power to the wireless receiver and/or removing the supply of power to the wireless receiver.

2. The photographing apparatus of claim 1, further comprising:
a first power supplying unit for supplying power to the wireless receiver; and
a second power supplying unit for supplying power to a body comprising the camera unit, the signal processor, and the display.

3. The photographing apparatus of claim 2, wherein the second power supplying unit and the wireless receiver are integrated in to a module to be mounted on and/or separated from the body.

4. The photographing apparatus of claim 1, wherein if the power switch is switched on, a mode of the video photographing apparatus is converted into a wireless receiving mode in which a video signal is received from the external photographing apparatus wirelessly.

5. The photographing apparatus of claim 1, further comprising a channel selector for selecting a channel of the wireless receiver.

6. The photographing apparatus of claim 5, wherein the channel selector selects one of four channels through manipulations of two switches.

7. The photographing apparatus of claim 5, wherein the channel selected by the channel selector coincides with a channel selected by the external photographing apparatus.

8. A video apparatus comprising:
a wireless receiver for receiving a video signal from an external apparatus wirelessly;
a display for displaying the video signal;
a mode selector for selecting one of a wireless receiving mode and a normal mode, wherein the video signal is received from the external apparatus by wireless in the wireless receiving mode; and
a channel selector for selecting a channel of the wireless receiver.

9. A photographing apparatus comprising:
a body for digitally processing a photographed video signal;
a display for displaying the digitally processed video signal;
a first power supplying unit for supplying a power source to the body and the display;
a wireless receiver for receiving a video signal from an external photographing apparatus wirelessly and transmitting the video signal to the body; and
a second power supplying unit for supplying a power source to the wireless receiver.

10. The photographing apparatus of claim 9, wherein if the power source is supplied to the wireless receiver, a mode of the photographing apparatus is converted into a wireless receiving mode in which the video signal is received from the external photographing apparatus by wireless.

11. The photographing apparatus of claim 9, further comprising a channel selector for selecting a channel of the wireless receiver.

12. A photographing apparatus comprising:
a signal generator for photographing a video and generating a video signal;
a transmitter for transmitting the video signal wirelessly; and
a channel selector for selecting a channel of the transmitter.

13. The photographing apparatus of claim 12, wherein the channel selector selects one of four channels through manipulations of two switches.

14. A method of transmitting and/or receiving data wirelessly, comprising:
transmitting a video signal generated by a first photographing apparatus wirelessly;
selecting a channel through which the video signal is to be transmitted wirelessly; and
transmitting the video signal to a second photographing apparatus through the channel wirelessly.

15. The method of claim 14, further comprising converting a mode of the second photographing apparatus into a wireless receiving mode in which the video signal is received from the first photographing apparatus wirelessly if power is supplied to a receiver of the second photographing apparatus.

16. The method of claim 14, wherein the channel through which the video signal is to be transmitted wirelessly is selected so that a channel of the first photographing apparatus coincides with a channel of the second photographing apparatus.
